(19) **Europäisches Patentamt**
**European Patent Office**
**Office européen des brevets**

(11) **EP 2 930 872 B1**

(12) **EUROPEAN PATENT SPECIFICATION**

(45) Date of publication and mention
of the grant of the patent:
**01.04.2020 Bulletin 2020/14**

(51) Int Cl.:
***H04L 1/00*** (2006.01)

(21) Application number: **14305519.2**

(22) Date of filing: **09.04.2014**

(54) **Method, user device and computer-readable medium for receiving a signal**

Verfahren, Vorrichtung und computerlesbares Speichermedium zum Empfangen eines Signals

Procédé, appareil et support de stockage lisible par ordinateur pour recevoir un signal

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.10.2015 Bulletin 2015/42**

(73) Proprietor: **Alcatel Lucent**
**91620 Nozay (FR)**

(72) Inventor: **Chen, Yejian**
**70435 STUTTGART (DE)**

(74) Representative: **Nokia EPO representatives**
**Nokia Technologies Oy**
**Karakaari 7**
**02610 Espoo (FI)**

(56) References cited:
- PETER HAMMARBERG ET AL: "Channel Estimation Algorithms for OFDM-IDMA: Complexity and Performance", IEEE TRANSACTIONS ON WIRELESS COMMUNICATIONS, IEEE SERVICE CENTER, PISCATAWAY, NJ, US, vol. 11, no. 5, 1 May 2012 (2012-05-01), pages 1722-1732, XP011444507, ISSN: 1536-1276, DOI: 10.1109/TWC.2012.030512.110426
- JIANG M ET AL: "Iterative Joint Channel Estimation and Multi-User Detection for Multiple-Antenna Aided OFDM Systems", IEEE TRANSACTIONS ON WIRELESS COMMUNICATIONS, IEEE SERVICE CENTER, PISCATAWAY, NJ, US, vol. 6, no. 8, 1 August 2007 (2007-08-01), pages 2904-2914, XP011190255, ISSN: 1536-1276, DOI: 10.1109/TWC.2007.05817
- SCHOENEICH H ET AL: "Iterative pilot-layer aided channel estimation with emphasis on interleave-division multiple access systems", EURASIP JOURNAL ON APPLIED SIGNAL PROCESSING, vol. 2006, no. 19, 81729, 2006, pages 1-15, XP002725377, HINDAWI USA ISSN: 1110-8657, DOI: 10.1155/ASP/2006/81729

EP 2 930 872 B1

**Description**

FIELD OF INVENTION

The present subject matter relates to reception transmission of user data over wireless networks and, particularly but not exclusively, to the propagation channel estimation and the user data detection and decoding.

BACKGROUND

Interleave-Division Multiple Access (IDMA) is recently recognized as a potential Physical Layer (PHY) solution for wireless communications. As a Multiple Access (MA) scheme to support multiuser detection, IDMA is capable of detecting and decoding multiple user signals with a single receive antenna. In IDMA the interleavers are used as the only means for doing the separation between the different users. Each user uses a different interleaver and the receiver uses the knowledge of the interleaver used by each user to separate the data send by each user. Hence, it can support some waveform solutions, for example Filter Bank Multi-Carrier (FBMC), in which Multiple-Input Multiple-Output (MIMO) technique cannot straightforwardly be supported to realize multiuser detection. IDMA can also jointly work with other waveforms for example Universal Filtered Multi-Carrier (UFMC). It also supports asynchronous traffic, for example when using Machine Type Communications (MTC).

It is also know the article of Peter Hammarberg et al. "Channel Estimation Algorithms for OFDMA-IDMA: Complexity and Performance" published within IEEE Transactions on Wireless Communications Vol 11 N°5 pages 1722-1732 and the article of Jiang M. et al. "Iterative Joint Channel Estimation and Multi-User Detection for Multiple-Antenna Aided OFDM Systems" published within IEEE Transaction on Wireless Communications, Vol 6 N° 8 pages 2904-2914.

SUMMARY

This summary is provided to introduce concepts related to reception and transmission of user data over wireless network and, particularly but not exclusively, to the propagation channel estimation and the user data detection and decoding.

In one implementation, a method for receiving user data over wireless networks, transported via a signal is described. This signal comprising at least two sub-signals respectively associated to at least two different users and comprising coded user data and predetermined pilot symbols, both associated to a user, the said sub-signal being send through a propagation channel. This method for receiving a signal comprises the following initial steps associated to the said two users:

a step of estimating at least two propagation channels, associated to at least two different users, using the said pilot symbols and the said signal,
a step of estimating first likelihoods, associated to at least coded user data of two different users, using at least two estimated propagation channels and the said signal,
a step of decoding the said user data and estimating second likelihoods of the coded user data using the said first likelihoods.

The method also comprises, after the initial steps, the following iterative steps, associated to at least one user, so-called user of interest, at least one of the other users being called interfering users;

a step of canceling interferences, inside the said signal, of the interfering users using the estimated propagation channels and the previously estimated second likelihoods associated to the interfering users,
a step of estimating the propagation channel, associated to the user of interest using the previously estimated propagation channel, the canceled signal and the previously estimated second likelihoods associated to the user of interest,
a step of estimating first likelihoods, associated to the coded user data of the user of interest, using the estimated propagation channel, the canceled signal and the previously estimated second likelihoods associated to the user of interest,
a step of decoding the said user data of the user of interest and estimating second likelihoods, associated to the coded user data of the user of interest using previously estimated first likelihoods associated to the user of interest,
the said method being characterized in that the predetermined pilot symbols are combined with the said coded user data, and wherein the step of canceling interferences is also configured to cancel the interferences of the pilot symbols from the user of interest and/or the interfering users, the said cancelation is realized using at least the estimated propagation channels.

Another implementation is an apparatus comprising means for carrying out the steps of the above described method.

In a another implementation a computer-readable medium comprising instructions which, when executed by a computer, cause the computer to carry out the steps of the method as described above.

BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 illustrates an exemplary IDMA system;

Figure 2 illustrates the receiving method according to a first embodiment of the subject matter;

Figure 3 illustrates the receiving method according to a second embodiment of the subject matter;

Figure 4 illustrates the receiving system according to a first embodiment of the subject matter;

Figure 5 illustrates the receiving system according to a second embodiment of the subject matter;

Figure 6.a illustrates a cyclical extension of pilot corresponds to the discrete pilot case;

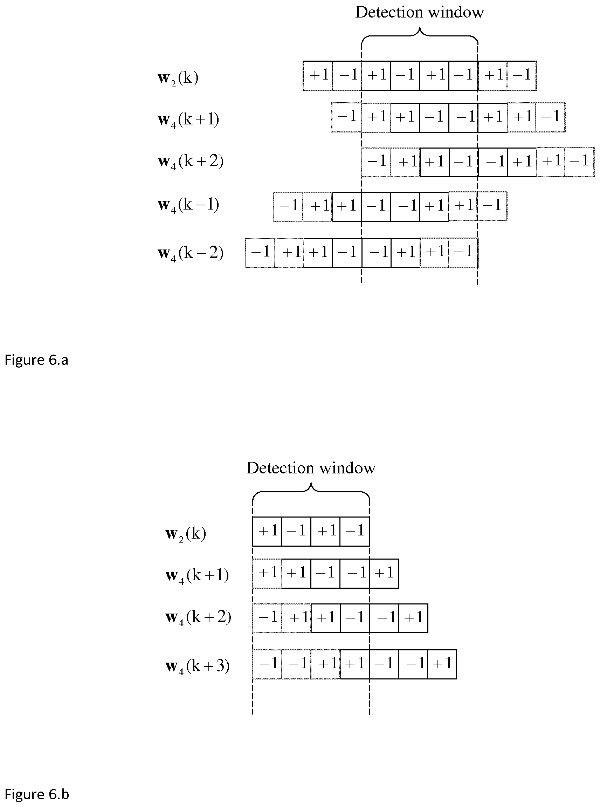

Figure 6.b illustrates a cyclical extension of pilot corresponds to the superimposed pilot case;

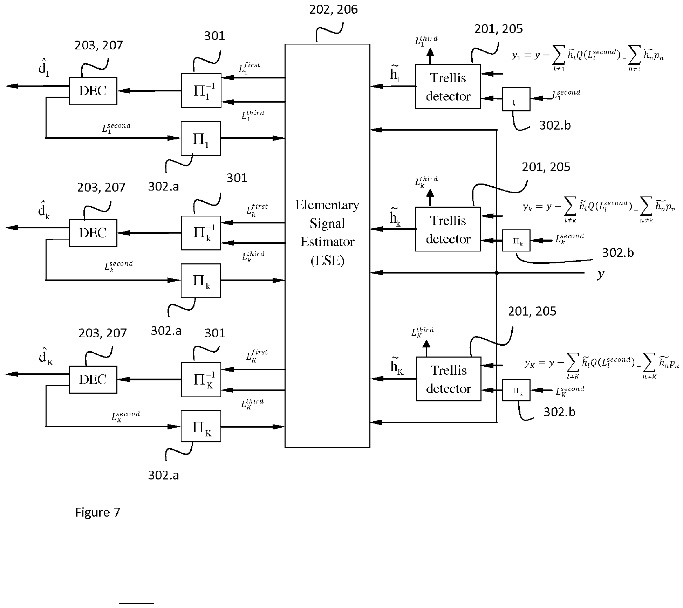

Figure 7 illustrates the receiving system according to a third embodiment of the subject matter;

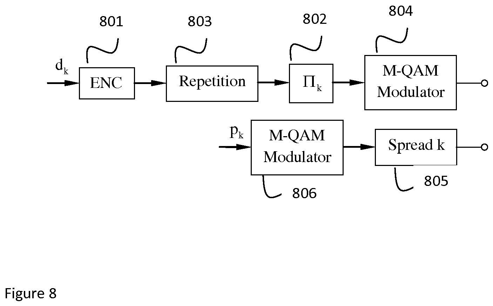

Figure 8 illustrates the transmitting method according to a first embodiment of the subject matter;

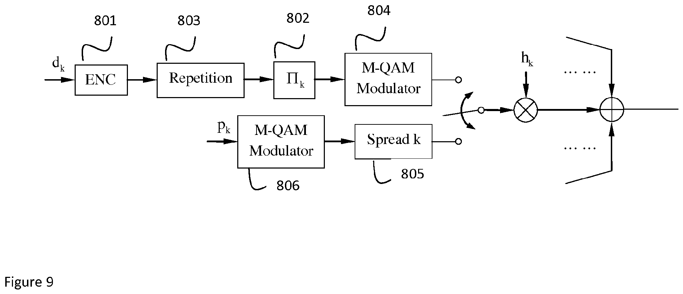

Figure 9 illustrates the transmitting method according to a second embodiment of the subject matter;

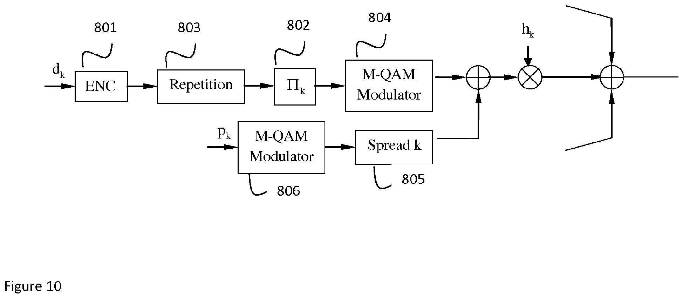

Figure 10 illustrates the transmitting method according to a third embodiment of the subject matter;

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

DESCRIPTION OF EMBODIMENTS

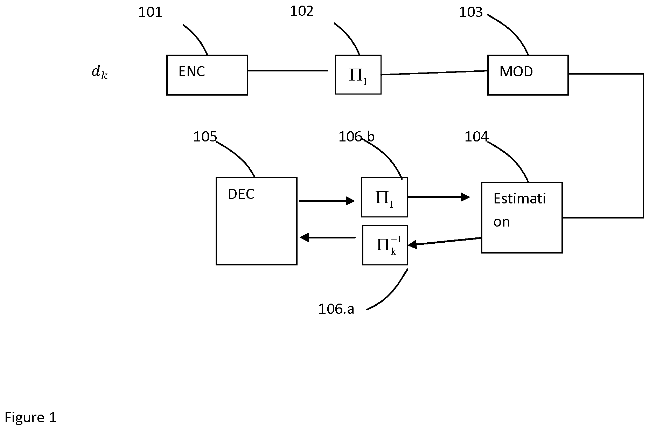

The figure 1 illustrates an exemplary IDMA system. The upper part of the figure 1 represents the transmitter structure of the multiple access schemes under consideration with $K$ simultaneous users. The input data sequence $d_k$ of user $k$ is firstly encoded by the module 101. The coded data are then permutated by an interleaver module 102. Users are solely distinguished by their interleaver, hence the name interleave-division multiple-access (IDMA). The key principle of IDMA is that the interleavers should be different for different users. It is assumed that the interleavers are generated independently and randomly. These interleavers disperse the coded data so that the adjacent transmitted symbols are approximately uncorrelated, which facilitates the reception of the data. After this interleaving the data are modulated using a modulator module 103, for example an M-QAM modulator can be used; however other types of modulator can be used. In an IDMA system any digital modulators are usable, as long as they are able to deliver soft-output to the channel decoder.

The down part of the figure 1 represents the receiver structure. The receiver comprises a module 104 configured to estimate a likelihood of coded received data of each user based on the received signal. One of the aim of this module is to separate the coded data sent by the different users. The receiver also comprise a module 105 configured to decode the received user data and to estimate a likelihood of the estimated coded user data using the likelihood of coded received data received from the module 104. Between these two modules is placed a deinterleaver module 106.a and an interleaver module 106.b. The two modules 104 105 exchange, through the interleaver and deinterleaver, information representing the likelihood of the coded received data. In a embodiment of the present subject matter these information can be for example extrinsic log-likelihood ratios (LLRs) represented using the following equation:

$$e\big(x_k(j)\big) = \log\left(\frac{p(\boldsymbol{y}|x_k(j) = +1)}{p(\boldsymbol{y}|x_k(j) = -1)}\right)$$

In this equation $x_k(j)$ represent the coded data number j of the user k, $e(x_k(j))$ represent the LLR associated to $x_k(j)$, $p(y|x_k(j) = +1)$ represent the probability of $x_k(j) = +1$, given the received signal y.

In an embodiment of the present subject matter, the receiver also comprises a module to estimate the propagation channel between the receiver and the different transmitters associated to the different users. In order to realize this estimation, the module uses the received signal and the knowledge of the different pilot symbols used by the different users.

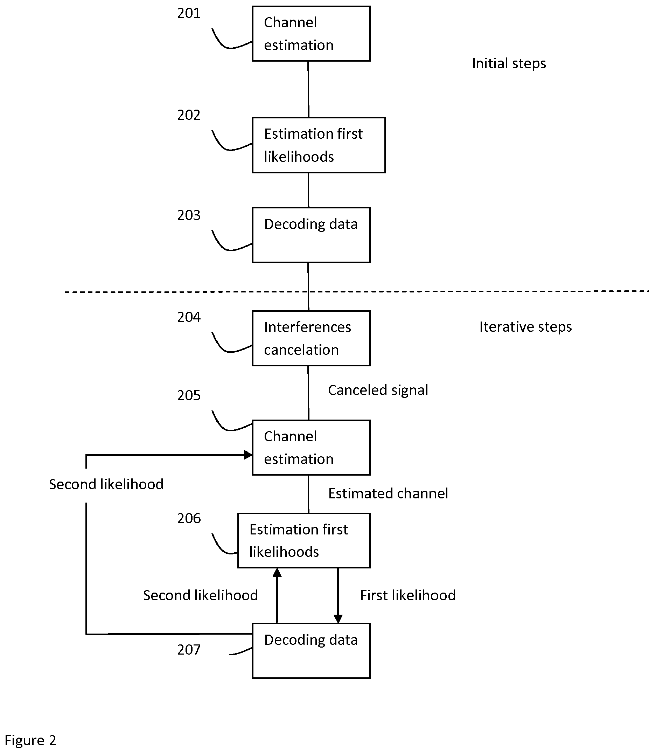

The figure 2 presents an embodiment of the present subject matter. This embodiment is a receiving method of a signal. The signal comprises two sub-signals respectively associated to two different users. In order to improve the clarity of the present patent application, in the following of this patent application, the expression "two" will be used instead of "at least two", identically the expression "one" will be used instead of the expression "at least one". It should be appreciated by those skilled in the art that the method, the user device or the computer program of the present subject matter can be modified in order to increase the number of signal, sub-signals, or users usable by the method, the user device or the computer program. These two sub-signals can be sent by the same user equipments or by two different user equipments. The sub-signal of each user comprises coded user data and predetermined pilot symbols. The sub-signals are sent to the receiver through a propagation channel, if the different users use different user equipments the propagation channel associated to each sub-signals will be different.

The method of figure 2 comprises initial steps and after these steps, iterative steps. However during the implementation of this method by the man ordinary skill the initial and iterative could be in the same coded part and only be separated by different parameterization during the method execution. The initial steps of the method comprise:

a step 201 of estimating two propagation channels, associated to at the two different users. This estimation is realized using the pilot symbols and the received signal.

a step 202 of estimating first likelihoods, associated to the coded user data of the two users. This estimation is realized using the estimated propagation channels of the two users and the received signal.

a step 203 of decoding the user data and of estimating second likelihoods, these second likelihoods are associated to the coded user data of the two users. This estimation is realized using the first likelihoods.

After these three initial steps, the method realizes the three following iterative steps. These steps are realized for at least one of the user, so-called user of interest, and when doing the processing for one user, the other users are considered to be interference and are called interfering users.
a step 204 of canceling interferences, inside the received signal, due to the interfering users. This cancelation is realized using the estimated propagation channels of the interfering users and the second likelihoods associated to the interfering users.
a step 205 of estimating the propagation channel of the user of interest. This estimation is realized using the previously estimated propagation channel, the canceled signal and the previously estimated second likelihoods associated to the user of interest.
a step 206 of estimating first likelihoods, associated to the coded user data of the user of interest. This estimation is realized using the estimated propagation channel, the canceled signal and the previously estimated second likelihoods associated to the interest user.
a step 207 of decoding the user data of the user of interest and estimating second likelihoods, associated to the coded user data of the user of interest. This estimation is realized using the previously estimated first likelihoods associated to the user of interest.

In other word, the method described previously, proposes to exchange soft-out values (also known as likelihood or LLR) between the step 206 of estimating first likelihoods and the step 207 of decoding the user of interest data. The method also proposes to exchange the so called soft-out values between the step 205 of estimating the propagation channel and the step 207 of decoding the user of interest data. In this exchange, the soft values used as input to the step 205 of estimating the propagation channel, to the step 206 of estimating first likelihoods, and to the step 207 of decoding the user of interest data serve as a a priori knowledge to achieve respectively more precise channel estimation more precise multi-users detection/separation and more precise channel decoding.

The step 204 of canceling interferences is realized using the following formula:

$$y_i = y - \sum_{l \neq i} \widetilde{h_l} Q\left(L_l^{second}\right)$$

In this equation $y_i$ represents the canceled signal associated to the user of interest $i$, $y$ represents the received signal, $\widetilde{h_l}$ represents the estimated propagation channel of the interfering user $l$, $L_l^{second}$ represents the second likelihoods associated with the interfering user $l$ and $Q$ is an operator to map the soft values from channel decoder to the transmitted symbol of user $l$.

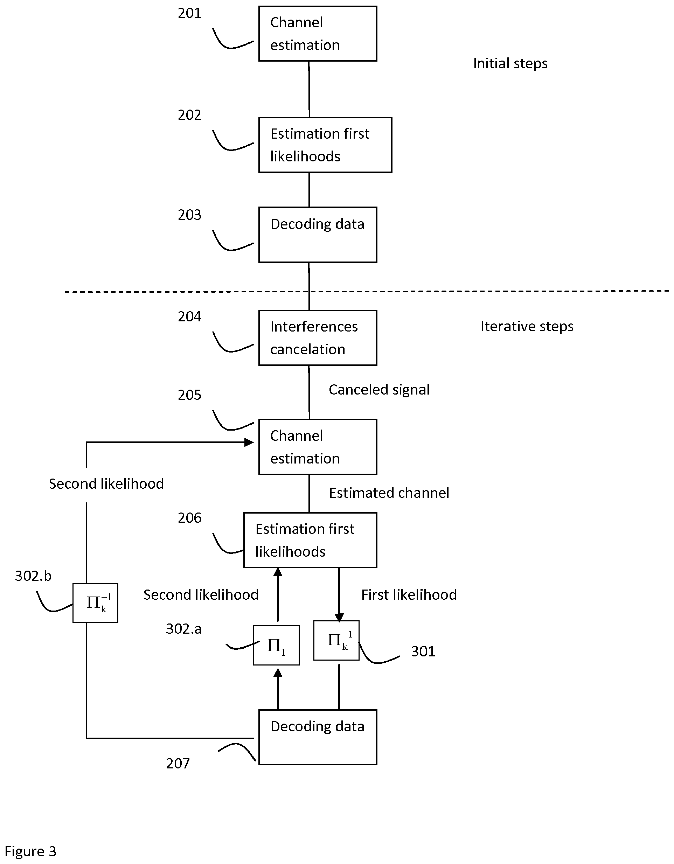

In an embodiment of the present subject matter, the different users are separated using the so-called IDMA. In this channel access method, each user is separated using the knowledge of their interleaver scheme. So in this embodiment the coded user data, associated to different users, are interleaved, by each transmitter, using different interleavers. So, the method of receiving presented figure 3, comprises a further step 301 of deinterleaving the first likelihoods exchanged between the step 206 of estimating first likelihoods and the step 207 of decoding the user of interest data. The method also comprises a step 302.a of interleaving the second likelihoods exchanged between the step 207 of decoding the user of interest data and the step 206 of estimating first likelihoods and a step 302.b of interleaving the second likelihoods exchanged between the step 207 of decoding the user of interest data and the step 205 of estimating the propagation channel.

IDMA allows the detection of multiple signal streams with only one single antenna. It cleverly deploys parallel interference cancellation (PIC) and fully exploits the diversity with user-specific interleaver. In a theoretical system, where the propagation channel is perfectly known by the receiver, IDMA is able to accommodate more than 40 users. The embodiment object of this subject matter, allow the same type of performance in the realistic case where the propagation channel is unknown by the receiver. These performance are achieved thank to the establishment of a propagation channel estimation within each turbo loop, to improve the channel knowledge for IDMA.

In an embodiment of the present subject matter, the pilot symbols are combined with the coded user data before to be sent by the transmitters or user devices. In this embodiment, the step 204 of canceling interferences is also configured to cancel the interferences of the pilot symbols, the said cancelation is realized using at least the estimated propagation channels. In this embodiment the step 204 of canceling interferences is realized using the following formula:

$$y_i = y - \sum_{l \neq i} \widetilde{h_l} Q\left(L_l^{second}\right) - \sum_{n \neq i} \widetilde{h_n} p_n$$

In this equation, as in the above equations, $y_i$ represents the canceled signal associated to the user of interest $i$, $y$ represents the received signal, $\widetilde{h_l}$ represents the estimated propagation channel of the interfering user $l$, $L_l^{second}$ represents the second likelihoods associated with the interfering user $l$ and $Q$ is an operator to map the soft values from channel decoder to the transmitted symbol of user $l$. The last part of the equation represents the interferences due to the pilot symbols of the users (user of interest plus interfering users). In this part of the equation $\widetilde{h_n}$ represents the estimated propagation channel of the user $n$ and $\widetilde{h_n}$ represents the pilot symbols of the user n. In this equation, the own superimposed pilot of user of interest is not subtracted as it is useful for trellis detection.

In a embodiment of the present subject matter, the iterative steps (204 to 207, 301, 302.a and 302.b) are realized until the number of iterations reaches a predetermined threshold. This threshold is a tradeoff between the complexity of the receiving method (this complexity decreases when the total number of iterations decreases) and the precision of the receiving method (this precision increases when the total number of iterations increases). Basically, the method will converge rapidly with only 2 or 3 iterations. The threshold can be determined thanks to a metric that qualify the convergence of the method. This qualification can be obtained by comparing the channel estimations after two successive iterations. Another metric could also be the mean square error (MSE) of the channel estimation, if the MSE is small enough, the iterations can be stopped.

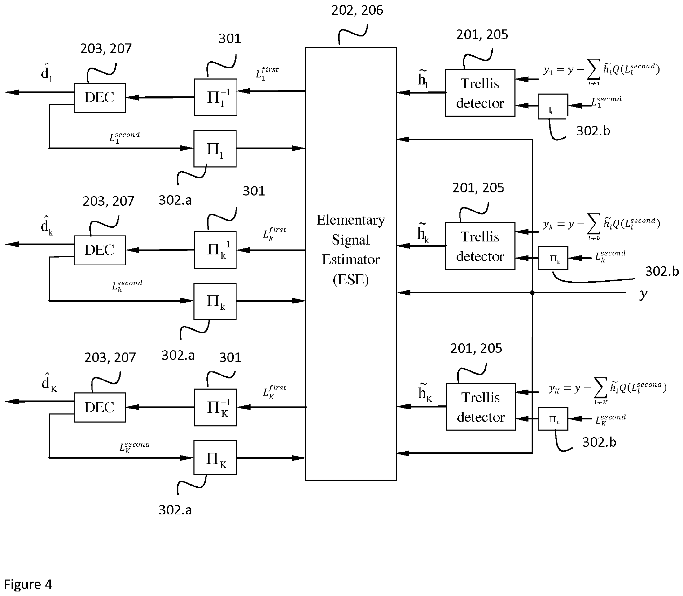

In an embodiment of the present subject matter the different steps (initial or iterative ones) can be realized using different algorithms. For example the step 201 and/or 205 of estimating the propagation channel can be configured to use a trellis detector, and/or the step 202 and/or 206 of estimating the first likelihoods can be configured to use the said trellis detector or a elementary signal estimator, and/or the step 203 and/or 207 of decoding can be configured to use a channel decoder. The figure 4 presents an exemplary of this receiving method when used with $K$ different users.

In the figure 4 $y$ represents the received signal, $(\widetilde{h_k})$ represents the estimated propagation channel of the user (interfering user or user of interest) $k$, $L_k^{first}$ represents the first likelihoods associated with the user (interfering user or user of interest) $k$, $L_k^{second}$ represents the second likelihoods associated with the user (interfering user or user of interest) $k$ and $Q$ is an operator to map the soft values from channel decoder to the transmitted symbol of user $l$. In the figure 4 the steps 201 and 205 of estimating the propagation channel are configured to use a trellis detector, and the steps 202 and 206 of estimating the first likelihoods are configured to use an elementary signal estimator, and the steps 203 and 207 of decoding are configured to use a channel decoder.

ESE deploys parallel interference cancellation (PIC) based on the soft-output from channel decoder. Then, the soft demapping is used to generate the soft-output for channel decoder.

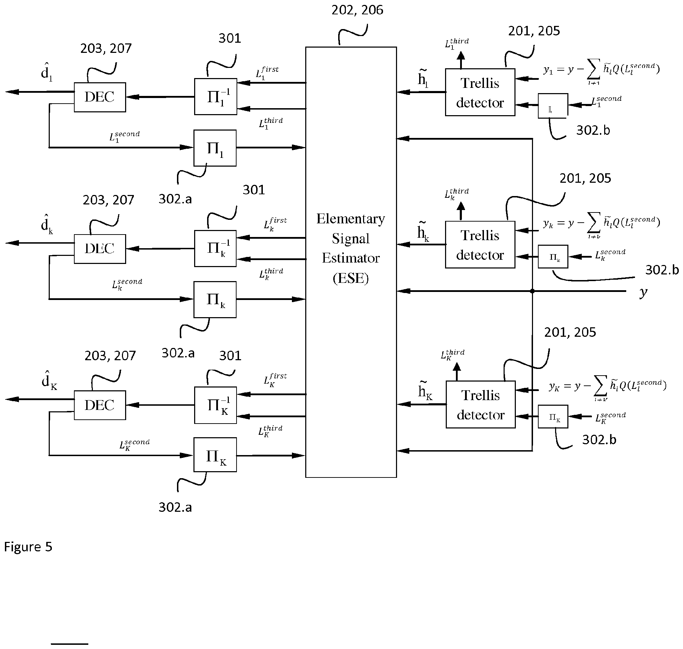

The figure 5 presents a embodiment of the present subject matter in which the trellis detector are configured to also output a third likelihoods associated to the coded user data of each user. These third likelihoods are used by the steps 203 and/or 207 of decoding in order to improve the performance of this decoding. The likelihood ratio is a logarithmical value. The more likely value has bigger absolute value. Hence, both likelihoods can be simply added to each other. This can bring in additional diversity of detections.

In other words, in the embodiment present figure 5, the pilot symbols are used to carry out the channel estimation using a trellis detector. Then, during each IDMA iterations, the soft-out values (also known as likelihoods) are exchanged between the channel decoder and trellis detector. The former can be regarded as the feedback to the trellis detector and serves as the a priori knowledge to achieve more precise channel estimation. The latter are utilized to be combined with the soft-out values of Elementary Signal Estimator (ESE) of IDMA system to deliver a a priori knowledge to the channel decoder. This exchange of soft-out information allows an increase in the performance of the system.

In the embodiments presented figure 4 and figure 5, a trellis detector with discrete pilot is used. This trellis detector is capable of jointly detecting the data and estimating the channel, with respect to Maximum a posteriori (MAP) algorithm. In order to estimate the propagation channel the discrete pilot patterns (also known as pilot symbols) of different users have to be orthogonal to each other. This orthogonality can for example be obtained by using Walsh Hadamard codes. In the synchronous IDMA system, the users can thus be absolutely separated, thanks to the orthogonality of the Walsh Hadamard codes.

If the different systems or user equipments are not perfectly synchronized, the orthogonality can still be satisfied in an asynchronous environment. In order to obtain this orthogonality the following Walsh Hadamard codes and matrix can be used:

$$\mathbf{W} = \begin{bmatrix} \mathbf{w}_1 & \mathbf{w}_2 & \mathbf{w}_3 & \mathbf{w}_4 \end{bmatrix}^{\mathrm{T}} = \begin{bmatrix} +1 & +1 & +1 & +1 \\ +1 & -1 & +1 & -1 \\ +1 & +1 & -1 & -1 \\ +1 & -1 & -1 & +1 \end{bmatrix}$$

By cyclically extend the spreading vector $w_2$ and $w_4$, these spreading vectors can be used as discrete pilot sequences. This is illustrated in the figure 6.a for discrete pilots and figure 6.b for superimposed pilots. Then by doing the cyclical extension, the spreading vector $w_2$ and $w_4$ will be orthogonal and $w_2(k)^H w_4(k+n) = 0$ for n = 1, 2 or 3. This robustness against asynchronicity is improved within the detection window as it is illustrated in the figure 6.a and figure 6.b. Thus, in the initialization stage, the orthogonal discrete pilot can provide the rough channel estimates with respect to linear interpolation and extrapolation techniques.

The following equations model the part of the signal representing the user data and the part of the signal representing the pilot symbols. The user data part is modeled by the $y = \sum_{k=1}^{K} h_k \sqrt{E_d} d_k + n$ and the pilot symbols part is modeled by the equation $y = \sum_{k=1}^{K} h_k \sqrt{E_p} (w_k p_k) + n$, with $\widetilde{p_k} = w_k p_k$.

In these two equations the vectors of the pilot symbols are $G \times 1$ dimensional. $G$ is the number of transmit symbols, $E_d$ and $E_p$ represent respectively the energy per symbol for the data and for the pilot, the vector $\widetilde{p_k}$ represents the discrete pilot vector after the spreading of pilot $p_k$, and $w_k$ is a user-specific spreading vector of user $k$ out of $K$ total

users. The channel $h_k$ is assumed to be time invariant during $G$ transmit symbols. Finally $\boldsymbol{n}$ represents the Additive White Gaussian Noise (AWGN), with noise of power spectral density $N_0$.

When the data and pilots are superimposed the equation of the signal is

$$\boldsymbol{y} = \sum_{k=1}^{K} h_k \sqrt{E_d} \widetilde{\boldsymbol{d}_k} + \sum_{k=1}^{K} h_k \sqrt{E_p} \widetilde{\boldsymbol{p}_k} + \boldsymbol{n},$$ with $\widetilde{\boldsymbol{p}_k} = \boldsymbol{w}_k p_k.$ $d_k$ is a normal scalar, namely data of user $k$. The superimposed pilot vector $\widetilde{\boldsymbol{p}_k} = \boldsymbol{w}_k p_k$ is $G \times 1$ dimensional. The data, superimposed by the $G \times 1$ pilot vector, is also a $G \times 1$ vector, denoted by $\widetilde{\boldsymbol{d}_k}.$

After the despreading operation, realized using the spreading code associated to the user for which the propagation channel is estimated, the channel propagation, estimated by the initial step 201 of estimating the propagation channel, follows the equation below:

$$\hat{h}_k = h_k + \frac{\widetilde{\boldsymbol{p}}_k^{H} \boldsymbol{n}}{G|p_k|^2 \sqrt{E_p}}$$

This equation is obtained when the data and the pilot symbols are sent in different time slots. In the above equation $\hat{h}_k$ represents the estimated propagation channel of user $k$, $h_k$ represents the propagation channel of user $k$, the vector $\widetilde{\boldsymbol{p}_k}$ represents the discrete pilot vector, and $\boldsymbol{w}_k$ is a user-specific spreading vector of user $k$. So the user is $k$ the user of interest. The corresponding spreading vector $\boldsymbol{w}_k$ is orthogonal to any other spreading vectors, denoted as $\boldsymbol{w}_l$. Thus, the initial channel estimation can be carried out by the described equations. The Mean Square Error (MSE) of this first estimation is:

$$MSE = \frac{N_0}{G|p_k|^2 . E_p}$$

When the data and the pilot symbols are combined/superimposed in the same time slots the estimated propagation channel follows the equation:

$$\hat{h}_k = h_k + \frac{\widetilde{\boldsymbol{p}}_k^{H}}{G|p_k|^2 \sqrt{E_p}} \left( \sum_{i=1}^{K} h_i \sqrt{E_d} \, \widetilde{\boldsymbol{d}}_i + \boldsymbol{n} \right)$$

The Mean Square Error (MSE) of this second estimation is:

$$MSE = \frac{KE_d + N_0}{G|p_k|^2 . E_p}$$

Assuming $|p_k|^2 = 1$, and considering the second estimation and an IDMA system with the following parameters setting:

$K$ = 12 users, $G$ = 64, $E_d$ = 0.6, $E_p$ = 0.4 and SNR $\frac{E_s}{N_0} = \frac{E_d + E_p}{N_0} = 0\text{dB}.$ The MSE is approximately -4.94dB.

$K$ = 12 users, $G$ = 64, $E_d$ = 0.6, $E_p$ = 0.4 and SNR $\frac{E_s}{N_0} = \frac{E_d + E_p}{N_0} = 5\text{dB}.$ The MSE is approximately -5.32dB.

$K$ = 12 users, $G$ = 64, $E_d$ = 0.6, $E_p$ = 0.4 and SNR $\frac{E_s}{N_0} = \frac{E_d + E_p}{N_0} = 20\text{dB}.$ The MSE is approximately -5.50dB.

In the situation where the pilot symbols and the data are superimposed, the estimation of the propagation channel can be interference limited, as illustrated above. The initial channel estimation can deliver adequate performance at low SNR, but these performances cannot be improved even at high SNRs.

Notice that using discrete pilots can reduce the channel estimation error by a factor $G$. And the linear interpolation and extrapolation will be taken into account for estimating the complete temporal channel response. The initial channel estimation in can deliver adequate performance for synchronous IDMA, and asynchronous IDMA with symbol-wise delay.

In an embodiment, the initial propagations channel estimates of the different users, can be utilized to initialize the operations, and generate the initial soft-out (also known as LLR or likelihood) from the channel decoder. Then in an iterative process the trellis detector will jointly detect the user data and provide the more precise channel estimation. The trellis detector utilizes the soft-out $L_l^{second}$ as the a priori knowledge.

In an embodiment, of the present subject matter, presents figure 7, the pilot symbols are combined with the coded user data before to be sent by the transmitters or user devices. In this embodiment, the step 204 of canceling interferences is also configured to cancel the interferences of the pilot symbols, the said cancelation is realized using at least the estimated propagation channels. In this embodiment the step 204 of canceling interferences is realized using the following formula:

$$y_i = y - \sum_{l \neq i} \widetilde{h_l} Q\left(L_l^{second}\right) - \sum_{n \neq i} \widetilde{h_n} p_n$$

In this equation, as in the above equations, $y_i$ represents the canceled signal associated to the user of interest $i$, $y$ represents the received signal, $\widetilde{h_l}$ represents the estimated propagation channel of the interfering user $l$, $L_l^{second}$ represents the second likelihoods associated with the interfering user $l$ and $Q$ is an operator to map the soft values from channel decoder to the transmitted symbol of user $l$. The last part of the equation represents the interferences due to the pilot symbols of the users (user of interest and interfering users). In this part of the equation $\widetilde{h_n}$ represents the estimated propagation channel of the user $n$ and $p_n$ represents the pilot symbols of the user n. In this embodiment, the precision of the channel estimation is increased, thanks to the iterative rejections of the interferences due to the other users and due to the pilot symbols of the other users. In this equation, the own superimposed pilot of user of interest is not subtracted as it is useful for trellis detection.

The figure 8 presents a method for transmitting the signals object of the present subject matter. As explained above, the signal is constituted of different sub-signals and each sub-signal is associated to a user. Each said sub-signal comprises a part dedicated to the transmission of the user data $d_k$ and a part dedicated to the transmission of predetermined pilot symbols $p_k$. Regarding the user data, the method of transmitting comprises a step 801 of coding the user data, a step 802 of interleaving the coded data using a different interleaver for each user. The method can also comprise a repetition 803 of the coded user data and a step 804 of modulation of the interleaved data. Regarding the pilot symbols, the method comprises a step 805 of spreading the pilot symbols using different spreading codes for the different users. The method can also comprise a step 806 of modulated of the pilot symbols.

In an embodiment of the present subject matter, the step 805 of spreading the pilot symbols is configured to use Walsh-Hadamard codes. As explained above the Walsh Hadamard codes allow a perfect orthogonality of the pilot symbols associated to different users in a perfectly synchronized system. If the system is not perfectly synchronized this orthogonality can be obtained by using cyclic extension.

In an embodiment of the present subject matter presented figure 9, the transmission method also comprises a step of allocating to the users at least two time slots associated respectively to the sole transmission of a part of the spreading pilot symbols and to the sole transmission of a part of the interleaved coded data.

In an embodiment of the present subject matter presented figure 10, the transmission method also comprises a step of combining together on at least one time slot, a part of the spreading pilot symbols and a part of the interleaved coded data. This embodiment allows a bigger data rate than the embodiment of figure 9 because there is no time slot lost due to the transmission of the pilot symbols. However in this embodiment the estimation and decoding performance are decrease compare to the performance reachable by the subject matter presented figure 9 because of the interferences between the user data and the pilot symbols.

In an embodiment of the present subject matter the transmission process comprises a step of balancing the power of the user data and the power of the pilot symbols. The aim of this balance is to hide the user data thanks to the superimposition of the pilot symbols over the user data.

For example, with a known modulation and coding scheme, an IDMA system requires a target Signal-to-Noise Ratio (SNR) $\gamma$ for an error-free detection. The current SNR is denoted $\gamma_c$. It holds,

$$\gamma_c = 10 \log \frac{E_d + E_p}{N_0} \rightarrow 10 \log \frac{E_d}{N_0} = \gamma_c - 10 \log \frac{E_p}{N_0} \rightarrow \gamma_c - 10 \log \frac{E_p}{N_0} \geq \gamma \rightarrow E_p \leq N_0 . 10^{\frac{\gamma_c - \gamma}{10}},$$ as a

upper bound of pilot power. The equation above, gives a lower bound, if the minimum MSE is required for the initial channel estimation.

An embodiment of the present subject matter is constituted of a user device for receiving a signal. As already explained above, the signal comprises two sub-signals respectively associated to two different users. Each sub-signal, associated to a user, comprises coded user data and predetermined pilot symbols. The sub-signals are sent through a propagation channel. The user device is associated to a user, so-called user of interest and at least one of the other users is called interfering users.

The user device comprises a processor and a memory coupled to the processor. In an embodiment, the user device includes one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

The modules, included inside the memory, comprise a interferences cancelation module, configured to cancel the interferences, inside the said signal, of the interfering user using a estimated propagation channels and previously estimated second likelihoods associated to the interfering users. A propagation channel estimation module is also included inside the memory. This propagation channel estimation module is configured to estimate the propagation channel associated to the user of interest using a previously estimated propagation channel, the canceled signal and previously estimated second likelihoods associated to the interest user. An estimation module is also included inside the memory. This estimation module is configured to estimate first likelihoods, associated to the coded user of interest data, using the estimated propagation channel, the canceled signal and the previously estimated second likelihoods associated to the interest user. A decoding module is also included inside the memory. This decoding module is configured to decode the said user of interest data and estimating second likelihoods, associated to the coded user of interest data using previously estimated first likelihoods associated to the interest user.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

In an embodiment of the subject matter, the method for receiving a signal described figure 2 can be performed by programmed computers. The signal comprise at least two sub-signals respectively associated to at least two different users and comprising coded user data and predetermined pilot symbols, both associated to a user, the said sub-signal being send through a propagation channel. The method comprises the following initial steps associated to two users:

a step 201 of estimating at least two propagation channels, associated to at least two different users using the said pilot symbols and the said signal,

a step 202 of estimating first likelihoods, associated to at least coded user data of two different users, using at least two estimated propagation channels and the said signal,

a step 203 of decoding the said user data and estimating second likelihoods of the coded user data using the said first likelihoods,

The method also comprises, after the initial steps, the following iterative steps, associated to at least one user, so-called user of interest, at least one of the other users being called interfering users;
a step 204 of canceling interferences, inside the said signal, of the interfering user using the estimated propagation channels and the previously estimated second likelihoods associated to the interfering users,
a step 205 of estimating the propagation channel, associated to the user of interest using the previously estimated propagation channel, the canceled signal and the previously estimated second likelihoods associated to the user of interest,
a step 206 of estimating first likelihoods, associated to the coded user data of the user of interest, using the estimated propagation channel, the canceled signal and the previously estimated second likelihoods associated to the user of interest,
a step 207 of decoding the said user of interest data and estimating second likelihoods, associated to the coded user data of the user of interest using the previously estimated first likelihoods associated to the user of interest.

**Claims**

1.    A method for receiving a signal, the said signal comprising at least two sub-signals respectively associated to at least two different users and comprising coded user data and predetermined pilot symbols, both associated to a user, the said sub-signal being send through a propagation channel, the said method comprising the following initial steps associated to the said two users:

a step (201) of estimating at least two propagation channels, associated to at least two different users, using the said pilot symbols and the said signal,
a step (202) of estimating first likelihoods, associated to at least coded user data of two different users, using at least two estimated propagation channels and the said signal,
a step (203) of decoding the said user data and estimating second likelihoods of the coded user data using the said first likelihoods,
the said method also comprising, after the initial steps, the following iterative steps, associated to at least one user, so-called user of interest, at least one of the other users being called interfering users;
a step (204) of canceling interferences, inside the said signal, of the interfering users using the estimated propagation channels and the previously estimated second likelihoods associated to the interfering users,
a step (205) of estimating the propagation channel, associated to the user of interest using the previously estimated propagation channel, the canceled signal and the previously estimated second likelihoods associated to the user of interest,
a step (206) of estimating first likelihoods, associated to the coded user data of the user of interest, using the estimated propagation channel, the canceled signal and the previously estimated second likelihoods associated to the user of interest,
a step (207) of decoding the said user data of the user of interest and estimating second likelihoods, associated to the coded user data of the user of interest using previously estimated first likelihoods associated to the user of interest,
the said method being **characterized in that** the predetermined pilot symbols are combined with the said coded user data, and wherein the step (204) of canceling interferences is also configured to cancel the interferences of the pilot symbols from the user of interest and/or the interfering users, the said cancelation is realized using at least the estimated propagation channels.

2.    The method as claimed in claim 1, wherein the coded user data associated to different users are interleaved using different interleavers and the said method comprised:

a step (301) of deinterleaving the first likelihoods exchanged between the step (206) of estimating first likelihoods and the step (207) of decoding the user of interest data and/or,
a step (302.a) of interleaving the second likelihoods exchanged between the step (207) of decoding the user of interest data and the step (206) of estimating first likelihoods and/or
a step (302.b) of interleaving the second likelihoods exchanged between the step (207) of decoding the said user data of the user of interest and the step (205) of estimating the propagation channel.

3.    The method as claimed in any one of the preceding claims, wherein the said iterative steps are realized until the number of iterations reaches a predetermined threshold.

**4.** The method as claimed in any one of the preceding claims, wherein

the initial step and/or the iterative step (201 and/or 205) of estimating the said propagation channel is/are configured to use a trellis detector, and/or
the initial step and/or the iterative step (202 and/or 206) of estimating the first likelihoods is/are configured to use the said trellis detector or a elementary signal estimator, and/or
the initial step and/or the iterative step (203 and/or 207) of decoding is/are configured to use a channel decoder.

**5.** An apparatus comprising means for carrying out the steps of the method defined by claim 1.

**6.** A computer-readable medium comprising instructions which, when executed by a computer, cause the computer to carry out the steps of the method as defined by claim 1.

**Patentansprüche**

**1.** Verfahren zum Empfangen eines Signals, wobei das Signal mindestens zwei Teilsignale umfasst, die jeweils mit mindestens zwei unterschiedlichen Benutzern assoziiert sind und codierte Benutzerdaten und vorbestimmte Pilotsymbole umfassen, die beide mit einem Benutzer assoziiert sind, wobei das Teilsignal über einen Ausbreitungskanal gesendet wird, wobei das Verfahren die folgenden anfänglichen Schritte umfasst, die mit den beiden Benutzern assoziiert sind:

einen Schritt (201) zum Schätzen von mindestens zwei Ausbreitungskanälen, die mit mindestens zwei unterschiedlichen Benutzern assoziiert sind, unter Verwendung der Pilotsymbole und des Signals,
einen Schritt (202) zum Schätzen erster Wahrscheinlichkeiten, die mit zumindest codierten Benutzerdaten von zwei unterschiedlichen Benutzern assoziiert sind, unter Verwendung von mindestens zwei geschätzten Ausbreitungskanälen und des Signals,
einen Schritt (203) zum Decodieren der Benutzerdaten und Schätzen zweiter Wahrscheinlichkeiten der codierten Benutzerdaten unter Verwendung der ersten Wahrscheinlichkeiten,
wobei das Verfahren außerdem nach den anfänglichen Schritten die folgenden iterativen Schritte umfasst, die mit mindestens einem Benutzer, einem sogenannten Benutzer von Interesse, assoziiert sind, wobei mindestens einer der anderen Benutzer störender Benutzer genannt wird;
einen Schritt (204) zum Aufheben von Störungen im Signal der störenden Benutzer unter Verwendung der geschätzten Ausbreitungskanäle und der zuvor geschätzten zweiten Wahrscheinlichkeiten, die mit den störenden Benutzern assoziiert sind,
einen Schritt (205) zum Schätzen des Ausbreitungskanals, der mit dem Benutzer von Interesse assoziiert ist, unter Verwendung des zuvor geschätzten Ausbreitungskanals, des aufgehobenen Signals und der zuvor geschätzten zweiten Wahrscheinlichkeiten, die mit dem Benutzer von Interesse assoziiert sind,
einen Schritt (206) zum Schätzen erster Wahrscheinlichkeiten, die mit den codierten Benutzerdaten des Benutzers von Interesse assoziiert sind, unter Verwendung des geschätzten Ausbreitungskanals, des aufgehobenen Signals und der zuvor geschätzten zweiten Wahrscheinlichkeiten, die mit dem Benutzer von Interesse assoziiert sind,
einen Schritt (207) zum Decodieren der Benutzerdaten des Benutzers von Interesse und Schätzen zweiter Wahrscheinlichkeiten, die mit den codierten Benutzerdaten des Benutzers von Interesse assoziiert sind, unter Verwendung von zuvor geschätzten ersten Wahrscheinlichkeiten, die mit dem Benutzer von Interesse assoziiert sind,
wobei das Verfahren **dadurch gekennzeichnet ist, dass** die vorbestimmten Pilotsymbole mit den codierten Benutzerdaten kombiniert werden, und wobei der Schritt (204) zum Aufheben von Störungen auch dazu ausgelegt ist, die Störungen der Pilotsymbole vom Benutzer von Interesse und/oder von den störenden Benutzern aufzuheben, wobei die Aufhebung unter Verwendung von zumindest den geschätzten Ausbreitungskanälen umgesetzt wird.

**2.** Verfahren nach Anspruch 1, wobei die codierten Benutzerdaten, die mit unterschiedlichen Benutzern assoziiert sind, unter Verwendung unterschiedlicher Verschachteler verschachtelt werden, und wobei das Verfahren Folgendes umfasst:

einen Schritt (301) zum Entschachteln der ersten Wahrscheinlichkeiten, die zwischen dem Schritt (206) zum Schätzen erster Wahrscheinlichkeiten und dem Schritt (207) zum Decodieren der Daten des Benutzers von Interesse ausgetauscht werden, und/oder

einen Schritt (302.a) zum Verschachteln der zweiten Wahrscheinlichkeiten, die zwischen dem Schritt (207) zum Decodieren der Daten des Benutzers von Interesse und dem Schritt (206) zum Schätzen erster Wahrscheinlichkeiten ausgetauscht werden, und/oder

einen Schritt (302.b) zum Verschachteln der zweiten Wahrscheinlichkeiten, die zwischen dem Schritt (207) zum Decodieren der Benutzerdaten des Benutzers von Interesse und dem Schritt (205) zum Schätzen des Ausbreitungskanals ausgetauscht werden.

3. Verfahren nach einem der vorangegangenen Ansprüche, wobei die iterativen Schritte umgesetzt werden, bis die Anzahl von Iterationen eine vorbestimmte Schwelle erreicht.

4. Verfahren nach einem der vorangegangenen Ansprüche, wobei
der anfängliche Schritt und/oder der iterative Schritt (201 und/oder 205) zum Schätzen des Ausbreitungskanals dazu ausgelegt ist/sind, einen Trellis-Detektor zu verwenden, und/oder
der anfängliche Schritt und/oder der iterative Schritt (202 und/oder 206) zum Schätzen der ersten Wahrscheinlichkeiten dazu ausgelegt ist/sind, den Trellis-Detektor oder einen Elementarsignalschätzer zu verwenden, und/oder
der anfängliche Schritt und/oder der iterative Schritt (203 und/oder 207) zum Decodieren dazu ausgelegt ist/sind, einen Kanaldetektor zu verwenden.

5. Vorrichtung, die Mittel zum Ausführen der Schritte des durch Anspruch 1 definierten Verfahrens umfasst.

6. Computerlesbares Medium, das Anweisungen umfasst, die bei Ausführung durch einen Computer veranlassen, dass der Computer die Schritte des wie durch Anspruch 1 definierten Verfahrens ausführt.

**Revendications**

1. Procédé pour recevoir un signal, ledit signal comprenant au moins deux sous-signaux associés respectivement à au moins deux utilisateurs différents et comprenant des données d'utilisateur codées et des symboles pilotes prédéterminés, les uns et les autres étant associés à un utilisateur, ledit sous-signal étant envoyé par le biais d'un canal de propagation, ledit procédé comprenant les étapes initiales suivantes associées auxdits deux utilisateurs :

une étape (201) d'estimation d'au moins deux canaux de propagation, associés à au moins deux utilisateurs différents, à l'aide desdits symboles pilotes et dudit signal,
une étape (202) d'estimation de premières probabilités, associées à au moins des données d'utilisateur codées de deux utilisateurs différents, à l'aide d'au moins deux canaux de propagation estimés et dudit signal,
une étape (203) de décodage desdites données d'utilisateur et d'estimation de secondes probabilités des données d'utilisateur codées à l'aide desdites premières probabilités,
ledit procédé comprenant également, après les étapes initiales, les étapes itératives suivantes, associées à au moins un utilisateur, appelé un utilisateur digne d'intérêt, au moins l'un des autres utilisateurs étant appelé utilisateur interfèrent ;
une étape (204) de suppression d'interférences, à l'intérieur dudit signal, des utilisateurs interférents à l'aide des canaux de propagation estimés et des secondes probabilités estimées auparavant associées aux utilisateurs interférents,
une étape (205) d'estimation du canal de propagation, associé à l'utilisateur digne d'intérêt à l'aide du canal de propagation estimé auparavant, du signal supprimé et des secondes probabilités estimées auparavant associées à l'utilisateur digne d'intérêt,
une étape (206) d'estimation de premières probabilités, associées aux données d'utilisateur codées de l'utilisateur digne d'intérêt, à l'aide du canal de propagation estimé, du signal supprimé et des secondes probabilités estimées auparavant associées à l'utilisateur digne d'intérêt,
une étape (207) de décodage desdites données d'utilisateur de l'utilisateur digne d'intérêt et d'estimation de secondes probabilités, associées aux données d'utilisateur codées de l'utilisateur digne d'intérêt, à l'aide de premières probabilités estimées auparavant associées à l'utilisateur digne d'intérêt, ledit procédé étant **caractérisé en ce que** les symboles pilotes prédéterminés sont combinés avec lesdites données d'utilisateur codées et dans lequel l'étape (204) de suppression d'interférences est également configurée pour supprimer les interférences des symboles pilotes de l'utilisateur digne d'intérêt et/ou des utilisateurs interférents, ladite suppression est réalisée à l'aide d'au moins les canaux de propagation estimés.

**2.** Procédé tel que revendiqué dans la revendication 1, dans lequel les données d'utilisateur codées associées à différents utilisateurs sont entrelacées à l'aide de différents entrelaceurs et ledit procédé inclut :

une étape (301) de désentrelacement des premières probabilités échangées entre l'étape (206) d'estimation de premières probabilités et l'étape (207) de décodage des données de l'utilisateur digne d'intérêt et/ou
une étape (302.a) d'entrelacement des secondes probabilités échangées entre l'étape (207) de décodage des données de l'utilisateur digne d'intérêt et l'étape (206) d'estimation de premières probabilités et/ou
une étape (302.b) d'entrelacement des secondes probabilités échangées entre l'étape (207) de décodage desdites données d'utilisateur de l'utilisateur digne d'intérêt et l'étape (205) d'estimation du canal de propagation.

**3.** Procédé tel que revendiqué dans l'une quelconque des revendications précédentes, dans lequel lesdites étapes itératives sont réalisées jusqu'à ce que le nombre d'itérations atteigne un seuil prédéterminé.

**4.** Procédé tel que revendiqué dans l'une quelconque des revendications précédentes, dans lequel
l'étape initiale et/ou l'étape itérative (201 et/ou 205) d'estimation dudit canal de propagation sont configurées pour utiliser un détecteur de treillis et/ou
l'étape initiale et/ou l'étape itérative (202 et/ou 206) d'estimation des premières probabilités sont configurées pour utiliser ledit détecteur de treillis ou un estimateur de signal élémentaire et/ou
l'étape initiale et/ou l'étape itérative (203 et/ou 207) de décodage sont configurées pour utiliser un décodeur de canal.

**5.** Appareil comprenant des moyens pour mettre en œuvre les étapes du procédé défini par la revendication 1.

**6.** Support lisible par ordinateur comprenant des instructions qui, lorsqu'elles sont exécutées par un ordinateur, contraignent l'ordinateur à mettre en œuvre les étapes du procédé tel que défini par la revendication 1.

Figure 1

Figure 2

Figure 3

Figure 4

Figure 5

Figure 6.a

Figure 6.b

Figure 7

Figure 8

Figure 9

Figure 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAMMARBERG et al.** Channel Estimation Algorithms for OFDMA-IDMA: Complexity and Performance. *IEEE Transactions on Wireless Communications,* vol. 11 (5), 1722-1732

- **JIANG M. et al.** Iterative Joint Channel Estimation and Multi-User Detection for Multiple-Antenna Aided OFDM Systems. *IEEE Transaction on Wireless Communications,* vol. 6 (8), 2904-2914